Europäisches Patentamt

European Patent Office

Office européen des brevets

(19)

(11) EP 1 089 164 A2

(12) EUROPEAN PATENT APPLICATION

(43) Date of publication:
04.04.2001 Bulletin 2001/14

(51) Int Cl.⁷: G06F 3/16

(21) Application number: 00308526.3

(22) Date of filing: 28.09.2000

(84) Designated Contracting States:
AT BE CH CY DE DK ES FI FR GB GR IE IT LI LU
MC NL PT SE
Designated Extension States:
AL LT LV MK RO SI

(30) Priority: 01.10.1999 US 411423

(71) Applicant: PC-Tel, Inc.
San Jose, California 95121 (US)

(72) Inventor: Mazzarini, Anthony L.
California 95121 (US)

(74) Representative: Freeman, Jacqueline Carol
W.P. THOMPSON & CO.
Celcon House
289-293 High Holborn
London WC1V 7HU (GB)

(54) **Autoswitch for a riser card**

(57)  A riser card compatible with the AC '97 specification includes an autoswitch that senses whether a primary codec is on an AC-link interface and configures a codec on the riser card accordingly. The autoswitch sets the codec to act as the primary codec if no other primary codec is present or to act as a secondary codec if the AC-link interface has a primary codec. One embodiment of the autoswitch uses the PRIMARY_DN# signal from the AC-link interface as a select signal that selects an ID number for the codec and selects the routing of a data signal from the codec to the AC-link interface.

FIG. 2A

## Description

BACKGROUND

Field of the Invention

This invention relates to devices that connect to computers and particularly to a circuit for automatically configuring an AC '97 riser card for use in computers with or without a primary codec.

Description of Related Art

The AC-link interface is a well-known computer interface for audio frequency codecs. Specifications entitled "Audio Codec '97" and "Audio/Modem Riser Specification", Rev. 1.01, which are available from Intel, Inc., describe the AC-link interface and are hereby incorporated by reference in their entirety. In general, the AC-link interface provides the electrical connections and the serial data protocol for use among a digital controller, typically on a computer motherboard, and one or more codecs on the same link. Primary advantages of the AC-link interface are the low pin count and low cost of an AC '97 compatible riser card when compared to devices compatible with other common computer interfaces such as the peripheral component interconnect (PCI) bus interface.

An example use of the AC-link interface is for an audio codec in a sound card or on the motherboard of the computer. The audio codec receives an analog signal from a microphone, converts the analog signal to digital data, and transmits the digital data to a host computer system via the AC-link interface. Also, the host computer system can use the AC-link interface to send a digital audio signal, for example, a WAV file, to the audio codec for conversion to an analog signal that is played through audio speakers.

Another example of a codec application is a modem codec of a host signal processing (HSP) modem. Typically, a modem codec is on a riser card rather than on the motherboard of the computer. Placing the modem codec on a riser card avoids certification of the motherboard for connection to telephone lines. The modem codec converts an analog Rx signal received via telephone lines to a digital Rx signal and sends the digital Rx signal to the host computer. The host computer processes or demodulates the digital Rx signal to extract incoming data. The host computer also encodes outgoing data as a digital Tx signal that represents an analog Tx signal in compliance with a communication protocol. The codec receives the digital Tx signal from the host computer and converts the digital Tx signal to the analog Tx signal for transmission on the telephone lines. The HSP modem uses the processing power of the host computer (e.g., the CPU of the host computer) and therefore requires less dedicated processing circuitry than conventional modems require.

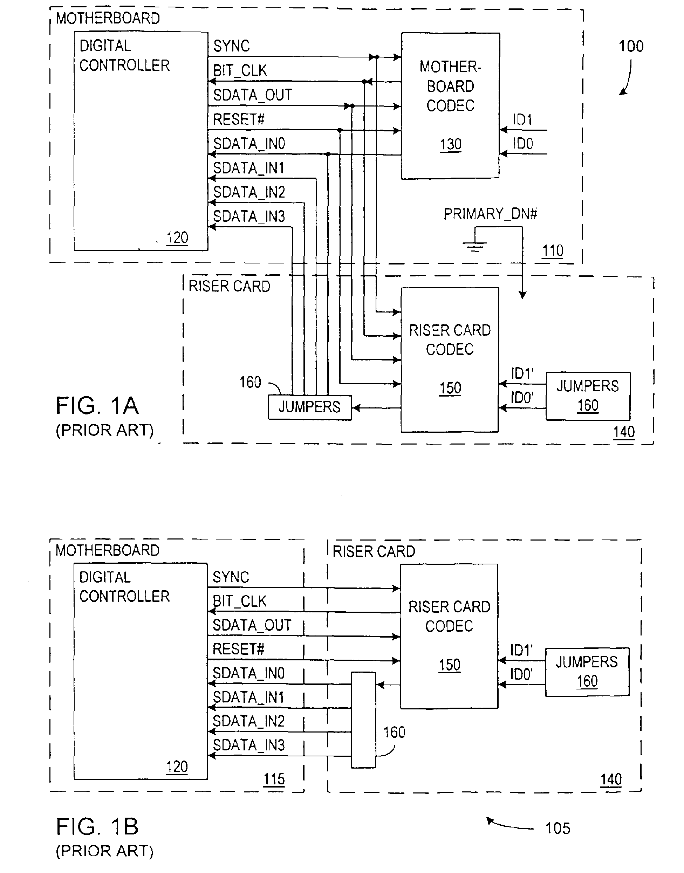

Fig. 1A illustrates a typical system 100 using an AC-link interface that connects a digital controller 120 to two codecs 130 and 150. Digital controller 120 is on a motherboard 110 of a host computer and mediates data transfer between either codec 130 or 150 and the rest of the host computer (not shown). In the example of Fig. 1A, codec 130 is on motherboard 110 and is the "primary" codec as described further below. The communications between digital controller 120 and codec 130 use signals SYNC, RESET#, BIT_CLK, SDATA_OUT, and SDATA_IN0. As the AC '97 specification describes, signals SDATA_OUT and SDATA_IN0 are serial data signals for data output from digital control 120 and data input to digital control 120, respectively. Signals SYNC and RESET# respectively indicate the starts of data packets according to the protocol for serial data transfers and trigger resets of the system. Signal BIT_CLK is a clock signal that controls the bit rate of the serial transfers to and from digital controller 120. The AC '97 specification requires that the primary codec (codec 130 in Fig. 1A) provide signal BIT_CLK, which all of the codecs 130 and 150 use for timing serial data transfers.

Circuitry on motherboard 110 grounds a signal PRIMARY_DN# to indicated primary codec 130 is on motherboard 110. Riser card 140 is responsible for interpreting signal PRIMARY_DN# and precluding contention on the AC-link, which would result from having more than one codec on the AC-link, configured as a primary codec.

Each codec on the AC-link interface has two ID bits that indicate an ID number between zero and three for the codec. The AC-link interface can accommodate up to four codecs including one primary codec and up to three secondary codecs. Each codec must have a distinct ID number, and a codec having ID number zero acts as the primary codec. In accordance with the AC '97 specification, terminals for ID bits ID0 and ID1 connect to internal pull-up resistors (not shown), and an open ID-bit terminal corresponds to a bit of value "0." Grounding an ID-bit terminal set the respective ID bit to "1." Both ID-bit terminals are open to indicate that codec 130 has ID number zero and is the primary codec. In response to the ID number being zero, codec 130 generates clock signal BIT_CLK. ID bits ID0' and ID1' for codec 150 represent a value between one and three to indicate that codec 150 is a secondary codec. Accordingly, instead of generating signal BIT_CLK, codec 150 uses signal BIT_CLK from primary codec 130. Both codecs 130 and 150 receive output data signal SDATA_OUT from digital controller 120, but each codec provides a separate input data signal to digital controller 120. The ID number of a codec indicates which of input data signal SDATA_IN0, SDATA_IN1, SDATA_IN2, or SDATA_IN3 the codec provides and which terminal of digital controller 120 connects to the codec for serial input data. The primary codec provides data signal SDATA_IN0, and the secondary codecs one, two, and three respectively provide data signals SDATA_IN1, SDATA_IN2, and SDATA_IN3.

Codec 150 is on a riser card 140 that plugs into a socket (not shown) on motherboard 110 for the electrical connections that the AC-link interface requires. Also on riser card 140 are switches, straps, or jumpers 160 that are manually configured. Straps assign the ID number to codec 150 and connect codec 150 to the correct serial data input terminal of controller 120. In system 100, the configuration of jumpers 160 set ID bits ID0' and ID1' to assign an ID number between one and three to codec 150. However, a system 105 shown in Fig. 1B has a motherboard 115 that does not include a primary codec, and codec 150 is the only codec connected to the AC link interface. Accordingly, in system 105, the configuration of jumpers 160 must set ID bits ID0' and ID1' and configure codec 150 as the primary codec. In particular, codec 150 must generate clock signal BIT_CLK and provide input data signal SDATA_IN0 to the correct terminal of digital controller 120.

A problem with riser card 140 is that a user installing riser card 140 in a computer system must know whether the computer system includes a primary codec and must correctly configure jumpers 160. This makes riser card more difficult to use. Further, jumpers 160 are additional components that increase the cost of riser card 140.

SUMMARY

In accordance with the invention, an autoswitch automatically configures a codec on a riser card for use in computer systems with and without primary codecs. Accordingly, the riser card operates properly without manual configuration and without a user knowing whether the motherboard contains an AC '97 primary codec. The autoswitch can be integrated into a codec or codec interface IC to decrease the number of components and the cost of the riser card.

One embodiment of the invention is a riser card that includes a codec and an autoswitch. The autoswitch senses a signal from an AC-link interface and selects an ID number for the codec according to the signal. In one particular embodiment, the signal from the AC-link is signal PRIMARY_DN#, which the "Audio/Modem Riser Specification" defines, and signal PRIMARY_DN# provides at least one bit used in the ID number of the codec. The autoswitch also includes a demultiplexing circuit that receives a data signal from the codec and routes the data signal to a line of the AC-link interface, specifically the line corresponding to the ID number.

In one particular embodiment, the demultiplexing circuit includes tri-state buffers. A first tri-state buffer has an enable terminal coupled to receive the first signal (e.g., signal PRIMARY_DN#). An input terminal of the first tri-state buffers receives the data signal, and an output terminal is coupled to a first data line of the AC-link interface. A second tri-state buffer has an enable terminal that receives a second signal having a state that is a logical inversion of the first signal. An input terminal of the second tri-state buffer receives the data signal from the codec, and an output terminal of the second tri-state buffer is coupled to a second data line of the AC-link interface. Thus, the first signal enables the first or second tri-state buffer, and thereby selects which line of the AC-link interface receives the data signal from the codec.

In general, a method for operating a codec on an AC-link interface in accordance with the invention includes sensing a signal on the AC-link interface to determine whether a primary codec is on the AC-link interface and configuring the codec according to the result of the sensing. If no primary codec is on the AC-link interface, the method configures the codec to operate as the primary codec on the AC-link. If there is a pre-existing primary codec on the AC-link interface, the method configures the codec to operate as a secondary codec on the AC-link. More particularly, the configuring assigns an ID number to the codec according to whether the signal indicated the presence of the primary codec. The method further selects a routing of a data signal from the codec to a selected data line of the AC-link. The selected data line is selected according to whether the first signal indicated the presence of a primary codec.

BRIEF DESCRIPTION OF THE DRAWINGS

Figs 1A and 1B are block diagrams of AC-links coupled to a riser card that uses manually-set switches, straps, or jumpers for configuration.

Figs. 2A and 2B are block diagrams of embodiments of the invention using autoswitches including passgates.

Fig. 3 is a diagram of an embodiment of the invention using an autoswitch including tri-state buffers.

Use of the same reference symbols in different figures indicates similar or identical items.

DETAILED DESCRIPTION

In accordance with an embodiment of the invention, an autoswitch for an AC '97 riser card senses whether a primary codec is on an AC-link interface. If the autoswitch does not sense a primary codec on the AC-link interface, the autoswitch configures a codec on the AC '97 riser card to act as the primary codec. If the autoswitch senses a primary codec on the AC-link interface, the autoswitch configures the codec to act as a secondary codec. The configuration includes selecting which data line on the AC '97 riser card uses for data sent to the host computer.

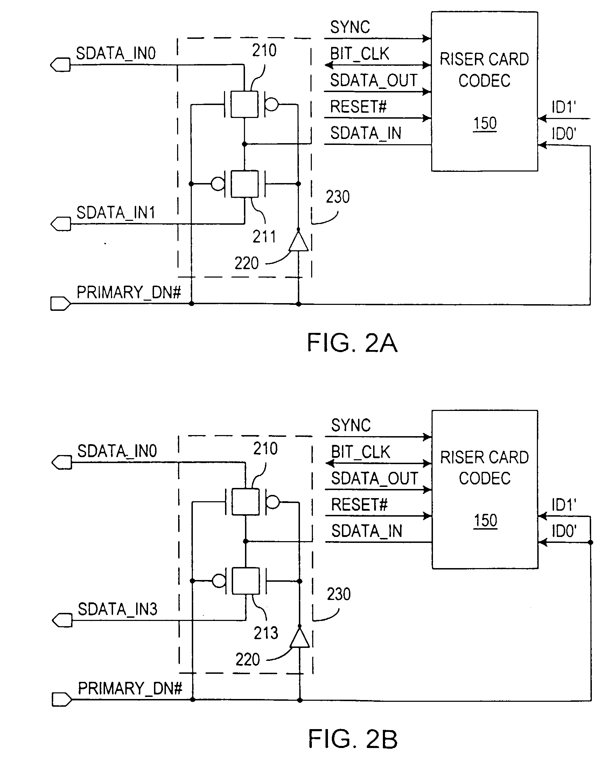

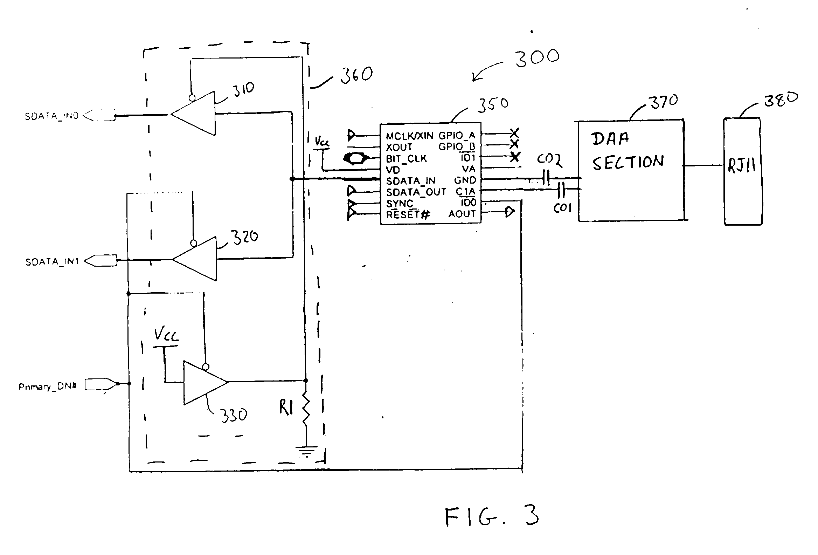

Fig. 2A shows an embodiment of the invention that senses a primary codec from the voltage level of a signal PRIMARY_DN#. In accordance with the "Audio/Modem Riser Specification", signal PRIMARY_DN# has a dedicated pin on the riser card interface connector on the motherboard of a computer. The dedicate line has a high resistance pull-up resistor, and the motherboard of a host computer pulls signal PRIMARY_DN# to a low voltage state if a primary codec is on the motherboard. Accordingly, signal PRIMARY_DN# being low indicates the presence of a primary codec on the motherboard, signal PRIMARY_DN# being high indicates the motherboard does not include a primary codec. Typically, the motherboard contains a single socket for a riser card containing one or more codecs.

In Fig. 2A, the voltage level of signal PRIMARY_DN# controls ID bit ID0' of codec 150. ID bit ID1' is zero, and a pull-up device in codec 150 pull the voltage on the terminal for ID bit ID1' to the high state. When the motherboard pulls signal PRIMARY_DN# low, ID bit ID0' is low (representing a value of one), and codec 150 is a secondary codec with ID number one. In response to bits ID0' and ID1' being respectively low and high, codec 150 acts as a secondary codec and uses clock signal BIT_CLK from the primary codec instead of generating signal BIT_CLK. When signal PRIMARY_DN# is high, ID bit ID0' is high (representing a bit value of zero), and codec 150 is the primary codec with ID number zero. More specifically, in response to both bits ID0' and ID1' being high, codec 150 generates clock signal BIT_CLK.

On the riser card, a demultiplexing circuit 230 routes a serial data signal SDATA_IN from codec 150 to the digital controller as input serial data signal SDATA_IN0 or input serial data signal SDATA_IN1. Signal PRIMARY_DN# acts as a select signal for demultiplexing circuit 230. In the embodiment of Fig. 2A, demultiplexing circuit 230 includes passgates 210 and 211 and an inverter 220 that inverts signal PRIMARY_DN#. When signal PRIMARY_DN# is high, passgate 210 is on, and passgate 211 is off. Passgate 210 provides data signal SDATA_IN from codec 150 to the pin on the riser card interface connector for signal SDATA_IN0. When signal PRIMARY_DN# is low, passgate 210 is off, and passgate 211 is on. Passgate 211 provides data signal SDATA_IN from codec 150 to the pin on the riser card interface connector for signal SDATA_IN1.

Fig. 2B shows an alternative embodiment where signal PRIMARY_DN# selects whether codec 150 is the primary codec with ID number zero or a secondary codec with ID number three. In Fig. 2B, signal PRIMARY_DN# provides both ID bits ID0' and ID1'. When signal PRIMARY_DN# is high, both bits ID0' and ID1' are zero, and codec 150 is the primary codec. When signal PRIMARY_DN# is low, each of bits ID0' and ID1' has value one, and codec 150 is the secondary codec with ID number three. A passgate 213 turns on when signal PRIMARY_DN# is low and connects data signal SDATA_IN from codec 150 to provide signal SDATA_IN3 to the controller for the AC-link interface.

Fig. 3 is a block diagram of a portion of a riser card 300 including an autoswitch containing tri-state buffers 310, 320, and 330 for configuration of a codec interface 350. Codec interface 350 has terminals for signals BIT_CLK, SDATA_OUT, SYNC, and RESET# in accordance with the AC '97 specification. As in the system of Fig. 2A, signal PRIMARY_DN# from the AC-link interface provides the least significant ID bit for a codec, and the most significant ID bit is zero. With this configuration, the codec is the primary codec (ID number 0) when signal PRIMARY_DN# is high and is a secondary codec (ID number 1) when signal PRIMARY_DN# is low. Other connections or circuitry for selecting the ID number of the secondary codec are also possible.

Tri-state buffers 310, 320, and 330 form a demultiplexing circuit 360 that selects signal SDATA_IN from codec interface 350 as either signal SDATA_IN0 or SDATA_IN1. For operation of demultiplexing circuit 360, signal PRIMARY_DN# connects to the inverted enable terminals of tri-state buffers 320 and 330. When signal PRIMARY_DN# is low to indicate the presence of a primary codec (not shown) on the AC-link interface, tri-state buffer 320 is enabled and provides signal SDATA_IN from codec interface 350 as signal SDATA_IN1 to the AC-link interface controller (not shown). Signal PRIMARY_DN# being low also enables tri-state buffer 330. An input terminal of tri-state buffer 330 connects to supply voltage Vcc (typically about 3.3 V), and an output of tri-state buffer 330 connects to an inverted enable terminal of tri-state buffer 310. Accordingly, when signal PRIMARY_DN# is low, tri-state buffer 330 disables tri-state buffer 310.

When signal PRIMARY_DN# is high to indicating no primary codec on the AC-link interface, tri-state buffer 320 is disabled, and system 300 does not provide signal SDATA_IN1. Signal PRIMARY_DN# being high also disables tri-state buffer 330, permitting a pull-down resistor R1 to pull the inverted enable terminal of tri-state buffer 310 to the low voltage state. Tri-state buffer 310, being thus enabled, provides signal SDATA_IN from codec interface 350 as signal SDATA_IN0 to the AC-link interface controller.

In an exemplary embodiment of the invention, system 300 is part of an AC '97 riser card for a host signal processing modem. In this particular embodiment, codec interface 350 is a PCT303A available from PCtel, Inc. The PCT303A has two sections, a digital part and an analog part. The digital part interfaces to the AC '97 link and is powered by the host computer. The analog part is a very high speed transceiver link between a DAA section 370 and the digital part. The PCT303A includes: pins for signals BIT_CLK, SDATA_IN, SDATA_OUT, SYNC, and RESET# for the AC-link interface as described above; pins $\overline{ID0}$ and $\overline{ID1}$ for the ID bits ID0' and ID1' of codec 350; a pin VD for power supply Vcc from the host computer for the digital portion of the PCT303A; pins MCLK/XIN and XOUT for timing signals from an external clock circuit or other source; a pin C1A for the analog input signal, and a pin Aout for analog output to a speaker that permits monitoring of (listening to) the input analog signal. A pin VA for the power supply (4.5 to 5 V) for the analog portion of the PCT303A. In systems such as 300 where a 5 V power supply is not available, an internal charge pump boosts a 3.3 V power supply connected to terminal VD, and terminal VA is not connected to a power supply. General purpose input/output pins GPIO_A and GPIO_B are not used in system 300.

In the exemplary embodiment, codec interface 350 also connects to a DAA section 370 that connects to telephone lines via a RJ11 connector 380. DAA section 370 includes a PCT303W available from Pctel, Inc. and associated components such as an off-hook control and a ring and caller ID network. Such DAA sections are well known for modems and other systems which connect to telephone lines. In system 300, the telephone lines supply the power for DAA section 370, and capacitors C01 and C02 provide an isolation barrier between the portion of system 300 powered by the telephone lines and the portion powered by the host computer.

Tri-state buffers 310, 320, and 330 are on a 74LVC125 integrated circuit available from Texas Instruments, Inc. Such tri-state buffers are capable of handling the high frequency serial data signals required used in the host signal processing modem. Resistor R1 has a resistance of about 47 kΩ. An inverter coupled to the inverted enable terminal of tri-state buffer 310 can replace tri-state buffer 330 and resistor R1. Alternatively, a tri-state buffer having signal PRIMARY_DN# coupled to a non-inverted enable terminal can replace the two tri-state buffers 310 and 330 and resistor R1. However, in the exemplary embodiment, use of identical tri-state buffers 310, 320, and 330 eliminates the need for a separate IC for an inverter or a tri-state buffer with a non-inverted enable.

Although the invention has been described with reference to particular embodiments, the description only provides examples of the invention's application and should not be taken as a limitation. In particular, even though much of preceding discussion was aimed at autoswitches that identified the presence of a primary codec from a signal PRIMARY_DN#, alternative embodiments of this invention can identify a primary codec from the oscillation or magnitude of others signals such as signal BIT_CLK. Additionally, the autoswitch circuits described herein can either be implemented in external circuitry separate from an integrated circuit codec or codec interface or can be incorporated in a codec or codec interface integrated circuit. Various other adaptations and combinations of features of the embodiments disclosed are within the scope of the invention as defined by the following claims.

**Claims**

1. A riser card comprising:

    a codec; and

    a demultiplexing circuit coupled to a signal line of an AC-link, a plurity of data lines of the AC-link interface, and a data terminal of the codec, wherein the demiltiplexing circuit routes a data signal from the codec to a select one of the plurality of data lines of the AC-link interface, and the demultiplexing circuit selects the selected one of the data lines according to a first signal on the signal line of the AC-link.

2. The riser card of claim 1, wherein the first signal is a signal PRIMARY_DN# as defined in "Audio/Modem Riser Specification".

3. The riser card of claim 1 or 2, wherein the first signal provides at least one bit of an ID number for the codec on the AC-link interface.

4. The riser card of claims 1, 2 or 3, wherein the first signal is a select signal for the demultiplexing circuit.

5. The riser card of any one of the preceding claims, wherein the demultiplexing circuit comprises:

    a first tri-state having an enable terminal coupled to receive the first signal, an input terminal coupled to receive the data signal, and an output terminal coupled to a first of the data lines of the AC-link interface; and
    a second tri-state buffer having an enable terminal coupled to receive a second signal, an input terminal coupled to receive the data signal, and an output terminal coupled to a second of the data lines of the AC-link interface, the second signal having a state that is a logical inversion of the first signal.

6. A method for operating a codec on an AC-link interface, comprising:

    sensing a first signal on the AC-link interface to determine whether a primary codec is on the AC-link interface; and
    routing a data signal from the codec to a selected data line of the AC-link, the selected data line being selected according to whether the first signal indicated the presence of the primary codec.

7. The method of claim 6, further comprising assigning an ID number to the codec according to whether the first signal indicated the presence of the primary codec.

8. The method of claim 6 or 7, wherein the first signal is a signal PRIMARY_DN# as defined in "Audio/Modem Riser Specification".

FIG. 1A
(PRIOR ART)

FIG. 1B
(PRIOR ART)

SDATA_IN0

210

SYNC

BIT_CLK

RISER CARD
CODEC

SDATA_OUT

RESET#

150

ID1'

SDATA_IN

ID0'

SDATA_IN1

211

230

220

PRIMARY_DN#

FIG. 2A

SDATA_IN0

210

SYNC

BIT_CLK

RISER CARD
CODEC

SDATA_OUT

RESET#

150

ID1'

SDATA_IN

ID0'

SDATA_IN3

213

230

220

PRIMARY_DN#

FIG. 2B

7

FIG. 3